# EUROPÄISCHE PATENTANMELDUNG

(11) **EP 2 128 589 A1**
(43) Veröffentlichungstag der Anmeldung: **02.12.2009**
(21) Anmeldenummer: 09161341.4
(22) Anmeldetag: 28.05.2009
(51) Int. Cl.: G01M 11/06

(54) **Verfahren und Vorrichtung zur Kalibrierung einer durch einen Frontscheinwerfer eines Fahrzeugs erzeugten vertikalen Hell-Dunkel-Grenze**

(30) Priorität: 28.05.2008 DE 102008025459
(71) Anmelder: Hella KGaA Hueck & Co., 59552 Lippstadt (DE)
(72) Erfinder: Hoffmann, Ingo, 10437, Berlin (DE)
(74) Vertreter: Schaumburg, Thoenes, Thurn, Landskron, Eckert

(57) **Zusammenfassung**

Die Erfindung betrifft ein Verfahren und eine Vorrichtung zur Kalibrierung mindestens einer durch mindestens einen Frontscheinwerfer (18) eines Fahrzeugs (10) erzeugten vertikalen Hell-Dunkel-Grenze (20a, 20b), bei denen mindestens ein Bild mit einer Abbildung eines Bereichs vor dem Fahrzeug (10) erfasst wird. Bei der Verarbeitung der Bilddaten des erfassten Bildes wird eine Position mindestens einer durch mindestens einen Frontscheinwerfer (18) des Fahrzeugs (10) erzeugten vertikalen Hell-Dunkel-Grenze (20a, 20b) als Ist-Position ermittelt und mit einer voreingestellten Soll-Position verglichen. Bei einer Abweichung der Ist-Position von der Soll-Position wird mindestens ein Korrekturwert gebildet.

## Beschreibung

Die Erfindung betrifft ein Verfahren und eine Vorrichtung zur Kalibrierung mindestens einer durch mindestens einen Frontscheinwerfer eines Fahrzeugs erzeugten vertikalen Hell-Dunkel-Grenze. Es sind Frontscheinwerfer bekannt, die eine voreinstellbare vertikale Hell-Dunkel-Grenze erzeugten können. Bei einer geeigneten Positionierung einer solchen vertikalen Hell-Dunkel-Grenze können Bereiche, in denen sich andere Fahrzeuge befinden, deren Fahrzeugführer durch das abgestrahlte Licht behindert werden könnten, von der Lichtabgabe selektiv ausgenommen werden. Dazu ist es erforderlich, dass die durch den Frontscheinwerfer des Fahrzeugs erzeugbare vertikale Hell-Dunkel-Grenze exakt positioniert werden kann, um eine fehlerhafte Positionierung der vertikalen Hell-Dunkel-Grenze zu vermeiden und eine optimale Ausleuchtung des Bereichs vor dem Fahrzeug zu erreichen. Zum exakten Positionieren muss die vertikale Hell-Dunkel-Grenze vorzugsweise in Bezug auf ein Fahrzeugkoordinatensystem und/oder auf ein Bilderfassungssystem exakt kalibriert sein.

Aus dem Dokument EP 1 437 259 B1 sind eine Vorrichtung und ein Verfahren zur Einstellung der Neigung eines Frontscheinwerfers bekannt um die Höhenausrichtung eines Kraftfahrzeugscheinwerfers mit Hilfe eines beweglichen Reflektors einzustellen. Dabei wird mit Hilfe einer Einrichtung ein spezifischer Lichtpunkt ausgesendet, der mit Hilfe einer am Fahrzeug angebrachten Kamera erfasst wird.

Aus dem Dokument DE 199 62 997 A1 ist ein Verfahren zur Kalibrierung eines Sensorsystems bekannt, bei dem charakteristische Daten eines Objekts erfasst werden und unter Berücksichtigung der Eigenbewegung des Fahrzeugs überprüft wird, ob diese Objekte ruhende bzw. quasi ruhende Objekte sind. Aufgrund einer ermittelten Bewegung der als ruhende Objekte erkannten Objekt unter Berücksichtigung der Eigenbewegung des Fahrzeugs wird ein Fehlervektor ermittelt, der zur Korrektur von Modelldaten herangezogen wird, um eine Minimierung der Abweichungen zu bewirken.

Aus dem Dokument DE 198 60 676 A1 ist eine Visualisierungseinrichtung mit einer Simulierung der durch wenigstens einen Scheinwerfer in einem Bereich vor einem Fahrzeug bewirkten Beleuchtung in einem Videobild bekannt.

Aus dem Dokument DE 198 27 349 A1 ist eine Vorrichtung zum Justieren eines Scheinwerfers eines Kraftfahrzeugs bekannt, durch die der Scheinwerfer auf eine vorgegebene Nulllage mittels einer kraftfahrzeugsexternen Messvorrichtung zur Erfassung der Ist-Stellung und zur Vorgabe einer Soll-Stellung des Scheinwerfers justiert wird.

Aus dem Dokument DE 197 04 427 A1 ist eine Leuchtweitenregulierungseinrichtung für ein Fahrzeug bekannt. Die Leuchtweitenregulierung erfolgt dabei durch das Aussenden und Erfassen spezieller Lichtspots.

Aus dem Dokument DE 38 26 813 A1 ist ein Darstellungsverfahren zur Lichtverteilung eines zu prüfenden Scheinwerfers bekannt, bei dem eine Szene mit einer Beleuchtung durch den zu prüfenden Scheinwerfer und mit einem Vergleichsscheinwerfer aufgenommen wird.

Aus dem Dokument DE 196 02 005 A1 ist eine Vorrichtung zur automatischen Korrektur der Ausrichtung wenigstens eines Schweinwerfers eines Kraftfahrzeugs bekannt, bei dem ein Beleuchtungsstärkesensor einen durch einen Strahler auf dem Boden vor dem Fahrzeug erzeugten Lichtfleck erfasst. Durch eine Lageänderung des Fahrzeugs erfolgt eine Verschiebung des Lichtflecks. Abhängig von der Lage des Lichtflecks wird die Ausrichtung des Scheinwerfers korrigiert.

Aus dem Dokument EP 1 201 498 A1 sind eine Vorrichtung und ein Verfahren zur Einstellung der Neigung eines Fahrzeugscheinwerfers bekannt. Zur Leuchtweitenkorrektur wird ein von einer Einrichtung ausgesendeter spezifischer Lichtpunkt erfasst und der Scheinwerfer solange verstellt, bis die Position des erfassten Lichtpunktes mit einer vorgegebenen Position übereinstimmt.

Aufgabe der Erfindung ist es, ein Verfahren und eine Vorrichtung zum Kalibrieren mindestens eines Frontscheinwerfers eines Fahrzeugs anzugeben, bei dem eine durch den Frontscheinwerfer erzeugte vertikale Hell-Dunkel-Grenze auf einfache Art und Weise eingestellt werden kann.

Diese Aufgabe wird durch ein Verfahren zur Kalibrierung mindestens einer durch mindestens einen Frontscheinwerfer eines Fahrzeugs erzeugten vertikalen Hell-Dunkel-Grenze mit den Merkmalen des Patentanspruchs 1 sowie durch eine Vorrichtung mit den Merkmalen des nebengeordneten Vorrichtungsanspruchs gelöst. Vorteilhafte Weiterbildungen der Erfindung sind in den abhängigen Patentansprüchen angegeben.

Durch ein Verfahren und durch eine Vorrichtung zur Kalibrierung mindestens einer durch mindestens einen Frontscheinwerfer eines Fahrzeugs erzeugten vertikalen Hell-Dunkel-Grenze wird erreicht, dass Abweichungen einer Ist-Position der Hell-Dunkel-Grenze von einer Soll-Position auf einfache Art und Weise ermittelt und korrigiert werden können. Dadurch werden Fehler durch nicht korrekte Kalibrierung der Frontscheinwerfer des Fahrzeugs vermieden. Ferner kann dadurch die Lichtabgabe durch die Frontscheinwerfer so erfolgten, dass die Hell-Dunkel-Grenze relativ nah an detektierte relevante Objekte, wie z. B. vorausfahrende und/oder entgegenkommende Fahrzeuge, positioniert werden kann, ohne dass die Fahrzeugführer dieser Fahrzeuge durch das von den Frontscheinwerfern abgestrahlte Licht beeinträchtigt werden. Behinderungen dieser Fahrzeugführer können somit vermieden und die Verkehrssicherheit sowohl durch die optimierte Ausleuchtung als auch durch das Vermeiden der Blendung anderer Verkehrsteilnehmer erhöht werden.

Durch das geeignete Positionieren von mindestens zwei durch einen oder mehrere Frontscheinwerfer eines Fahrzeugs erzeugten Hell-Dunkel-Grenzen kann ein von den Hell-Dunkel-Grenzen begrenzter Streifen bzw. Winkelbereich nicht oder nur mit geringer Intensität ausgeleuchtet werden, sodass eine optimale Ausleuchtung des Bereichs vor dem Fahrzeug erreicht und eine Behinderung anderer Verkehrsteilnehmer vermieden werden.

Durch das Verfahren und die Vorrichtung der unabhängigen Patentansprüche wird jeweils sichergestellt, dass die Frontscheinwerfer des Fahrzeugs und das die Frontscheinwerfer ansteuernden Fahrerassistenzsysteme optimal aufeinander abgestimmt werden können und eine nicht korrekte Einstellung der Frontscheinwerfer erkannt und durch ein Lichtassistenzsystem berücksichtigt werden können. Ferner ist es vorteilhaft, den mindestens einen Korrekturwert wiederholt zu erfassen und eine Nachverfolgung, ein sogenanntes Tracking, des Korrekturwertes durchzuführen.

Ferner wird erreicht, dass mindestens ein Koordinatensystem, auf das das steuernde Kamerasystem bezogen ist, und mit der mindestens einen durch den mindestens einen Frontscheinwerfer des Fahrzeugs erzeugten vertikalen Hell-Dunkel-Grenze auf einfache Art und Weise in Übereinstimmung gebracht werden kann.

Vorteilhaft ist es, das mindestens eine Bild mit Hilfe einer Bilderfassungseinheit zu erfassen und die durch die Bilderfassungseinheit erzeugten Bilddaten des Bildes eines Bereichs vor dem Fahrzeug durch eine Verarbeitungseinheit zum Ermitteln der Ist-Position der mindestens einen vertikalen Hell-Dunkel-Grenze zu verarbeiten. Als Bilderfassungseinheit eignet sich insbesondere eine bekannte Fahrzeugkamera. Die Bilderfassungseinheit kann insbesondere eine monokulare Kamera, mehrere monokulare Kameras, ein Stereokamerasystem oder mehrere Stereokamerasysteme umfassen, wobei die einzelnen Kameras Bilddaten von Graustufenbildern oder Farbbildern erzeugen. Besonders vorteilhaft ist die Verwendung einer Kamera mit mindestens einem CMOS-Bilderfassungssensor, der vorzugsweise Graustufenbilder erzeugt. Beispielsweise hat die Bilderfassungseinheit einen Active-Pixel-Sensor als Bilderfassungssensor.

Weiterhin ist es vorteilhaft, den mindestens einen ermittelten Korrekturwert zu speichern. Dadurch kann der Korrekturwert bei einer weiteren Ansteuerung der Frontscheinwerfer berücksichtigt werden. Die gespeicherten Korrekturdaten können dann in einer Fachwerkstatt ausgelesen werden. Bei dauerhafter Abweichung kann die Ausrichtung der Scheinwerfer durch eine entsprechende Justage der Scheinwerfer abhängig von den gespeicherten Korrekturdaten dauerhaft geändert werden. Ferner ist es vorteilhaft, zum Kalibrieren den horizontalen Helligkeitsverlauf in einem mit Hilfe einer Bilderfassungseinheit erfassten Bildes mit einer Abbildung eines Bereichs vor dem Fahrzeug zu ermitteln. Mit Hilfe des Helligkeitsverlaufs können Anstiege und die Überschreitung von voreingestellten Grenzwerten ermittelt werden. Abhängig von den ermittelten absoluten Helligkeitswerten und/oder den Anstiegen der Helligkeitswerte in bestimmten Bereichen des Helligkeitsverlaufs kann auf einfache Art und Weise mindestens eine vertikale Hell-Dunkel-Grenze ermittelt werden.

Dabei ist es vorteilhaft, zum Ermitteln des Helligkeitsverlaufs nur Helligkeitswerte der Bilderfassungselemente zu berücksichtigen, die voreingestellten Detektionszeilen zugeordnet sind. Hierdurch wird der Rechenaufwand reduziert, wodurch eine schnellere Reaktion des Systems auf sich ändernde Bedingungen erfolgen kann. Die mit Hilfe dieser Bilderfassungselemente ermittelten Helligkeitswerte werden spaltenweise summiert bzw. aufintegriert.

Bei einer Weiterbildung der Erfindung wird eine Veränderung bzw. Korrektur der vertikalen Hell-Dunkel-Grenze mit Hilfe einer Veränderung der Kurvenlichteinstellung der Frontscheinwerfer des Fahrzeugs durchgeführt. Alternativ oder zusätzlich kann eine Verstellung der vertikalen Hell-Dunkel-Grenze durch Zu- und/oder Abschalten einer oder mehrerer Lichtquellen mindestens eines Frontscheinwerfers des Fahrzeugs durchgeführt werden.

Das Verfahren und die Vorrichtung können besonders vorteilhaft bei Straßenfahrzeugen eingesetzt werden.

Die Vorrichtung kann in gleicher Weise weitergebildet werden, wie für das Verfahren nach Anspruch 1. Insbesondere kann die Vorrichtung mit den in den abhängigen Patentansprüchen angegebenen Merkmalen bzw. durch entsprechende Vorrichtungsmerkmale weitergebildet werden.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

### Es zeigen:

- Figur 1: eine schematische Seitenansicht einer Verkehrssituation mit zwei Fahrzeugen, wobei das hinter dem ersten Fahrzeug fahrende zweite Fahrzeug ein System zur veränderlichen Einstellung der vertikalen Hell-Dunkel-Grenze hat; und
- Figur 2: die Lichtverteilung an der Stelle eines vorausfahrenden ersten Fahrzeugs bei Einsatz eines Systems zur Steuerung der vertikalen Hell-Dunkel-Grenze.

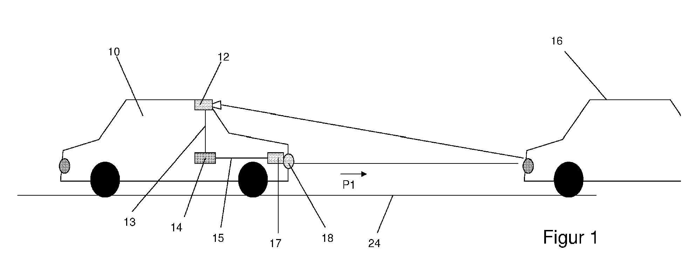

In Figur 1 ist eine schematische Seitenansicht einer Verkehrssituation mit zwei Fahrzeugen dargestellt, wobei das hinter dem ersten Fahrzeug 16 fahrende zweite Fahrzeug 10 ein System zur veränderlichen Einstellung der vertikalen Hell-Dunkel-Grenze hat, gezeigt. Das zweite Fahrzeug 10 umfasst eine Frontkamera 12, die Bilddaten von Bildern mit Abbildungen eines Bereichs vor dem Fahrzeug 10 erzeugt. Die Kamera 12 ist über eine Datenleitung 13 mit einer Steuereinheit 14 verbunden. Die von der Kamera 12 erzeugten Bilddaten werden in der Steuereinheit 14 mittels eines Bildverarbeitungssystems verarbeitet, wobei relevante Objekte detektiert werden. Solche relevante Objekte sind insbesondere andere Fahrzeuge, deren Fahrzeugführer durch das vom zweiten Fahrzeug 10 ausgestrahlte Licht geblendet und somit gefährdet werden könnten. Im Ausführungsbeispiel ist als ein solches relevantes Objekt das auf der gleichen Fahrspur vorausfahrende erste Fahrzeug 16 dargestellt. Weitere relevante Objekte können beispielsweise entgegenkommende Fahrzeuge sein.

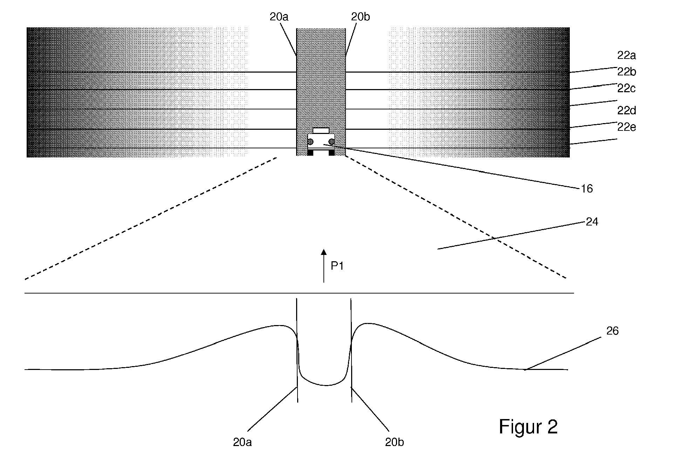

Die Steuereinheit 14 ist weiterhin über eine zweite Datenleitung 15 mit den Lichtsteuermodulen 17 verbunden, wobei den Frontscheinwerfern 18 des zweiten Fahrzeugs 10 jeweils ein Lichtsteuermodul 17 zugeordnet ist. Die Steuereinheit 14 gibt den Lichtsteuermodulen 17 eine Lichtverteilung für den dem jeweiligen Lichtsteuermodul 17 zugeordneten Frontscheinwerfer 18 vor. Die Lichtsteuereinheiten 17 steuern den ihnen zugeordneten Frontscheinwerfer 18 oder die ihnen zugeordneten Frontscheinwerfer derart an, dass sein/ihr abgestrahltes Licht eine gewünschte vorgegebene Lichtverteilung erzeugt. Dazu aktivieren die Lichtsteuereinheiten 17 die erforderlichen Lichtquellen und/oder Aktoren zum Einstellen des Abstrahlwinkels des abgestrahlten Lichts. Dadurch wird die Lichtabgabe der Frontscheinwerfer 18 des zweiten Fahrzeugs 10 so gesteuert, dass der Fahrer des vorausfahrenden ersten Fahrzeugs 16 nicht geblendet wird. Hierzu werden die durch die Frontscheinwerfer 18 erzeugten vertikalen Hell-Dunkel-Grenzen ausreichend seitlich neben dem vorherfahrenden ersten Fahrzeug 16 positioniert. Die vertikalen Hell-Dunkel-Grenzen sind in Figur 2 schematisch durch die Linien 20a und 20b dargestellt und geben die vertikalen Grenzen der von den Frontscheinwerfern 18 beleuchteten Bereiche an. Die vertikalen Hell-Dunkel-Grenzen (20a, 20b) werden weiter unten in Verbindung mit Figur 2 noch näher erläutert.

Eine entsprechende Verschiebung der vertikalen Hell-Dunkel-Grenze 20 kann je nach Modell des Fahrzeugs 10 und je nach der verwendeten Technik der Frontscheinwerfer 18 unterschiedlich erfolgen. Insbesondere können die vertikalen Hell-Dunkel-Grenzen 20a und 20b durch eine Kurvenlichtansteuerung der Frontscheinwerfer 18 und/oder das Zu- bzw. Abschalten einer oder mehrerer Lichtquellen geändert bzw. verschoben werden.

Die Kamera 12 und die Frontscheinwerfer 18 müssen exakt auf das nicht dargestellte Fahrzeugkoordinatensystem und damit aufeinander kalibriert sein, um die vertikalen Hell-Dunkel-Grenze 20a und 20b korrekt einstellen zu können. Das Fahrzeugkoordinatensystem ist nach DIN 70 000 als ein dreidimensionales, rechtshändiges Koordinatensystem definiert, bei dem die X-Achse in Fahrtrichtung zeigt, die Y-Achse in Fahrrichtung gesehen nach links zeigt und die Z-Achse orthogonal auf den anderen beiden Achsen steht und nach oben gerichtet ist. Sind die Kamera 12 und die Frontscheinwerfer 18 nicht exakt aufeinander kalibriert, ist eine Blendung anderer Verkehrsteilnehmer, wie im Ausführungsbeispiel des Fahrers der ersten Fahrzeugs 16, möglich, was zur Gefährdung dieses Verkehrsteilnehmers und gegebenenfalls weiterer Verkehrteilnehmer führen kann. Die Kamera 12 und die Frontscheinwerfer 18 werden in den vorliegenden Ausführungsbeispielen regelmäßig aufeinander kalibriert, um eine korrekte Positionierung der vorgegebenen vertikalen Hell-Dunkel-Grenzen 20a und 20b sicherzustellen.

Alternativ können die Kamera 12 und die Steuereinheit 14 in einer Einheit zusammengefasst werden.

In Figur 2 ist die Lichtverteilung in der Entfernung des vorausfahrenden ersten Fahrzeugs 16, die mit Hilfe des Systems zur Steuerung der vertikalen Hell-Dunkel-Grenze 20a, 20b des zweiten Fahrzeugs 10 erzeugt worden ist, dargestellt. Zur Kalibrierung der vertikalen Hell-Dunkel-Grenze 20a, 20b wird von der Kamera 12 ein Bild des in Fahrtrichtung P1 vor dem Fahrzeug 10 liegenden Bereichs aufgenommen und mittels eines durch die Steuereinheit 14 bereitgestellten Bildverarbeitungsverfahrens werden die vertikalen Hell-Dunkel-Grenzen 20a und 20b detektiert. Hierzu werden entlang im gleichen Abstand parallel zueinander verlaufender Detektionszeilen 22a bis 22e die Helligkeitswerte bestimmt. Die Detektionszeilen 22a bis 22e verlaufen horizontal, parallel zur Fahrbahn 24. Vorteilhafterweise erfolgt die Lichtmessung mittels eines Active-Pixel-Sensors, der auf der CMOS-Technologie basiert. Hierbei wird das Bild durch eine Vielzahl in einer Matrix angeordneter Bilderfassungselemente erfasst. Die Helligkeitswerte, die mit Hilfe der den Detektionszeilen 22a bis 22e zugeordneten Bilderfassungselemente ermittelt worden sind, werden spaltenweise aufkumuliert, so dass sich der im unteren Teil der Figur 2 dargestellte Helligkeitsverlauf 26 ergibt.

Alternativ kann auf die Einführung von Detektionszeilen 22 verzichtet werden und der Helligkeitsverlauf 26 durch spaltenweise Integration der Helligkeitswerte über das gesamte Bild erfolgen. Vorteilhafterweise erfolgt die Integration der Helligkeitswerte nur über einen bestimmten voreingestellten Bereich des Bildes, in dem die vertikalen Hell-Dunkel-Grenzen 20a und 20b erwartet werden. Die Einführung von Detektionszeilen 22 bietet aber den Vorteil, dass hierdurch der Rechenaufwand reduziert wird, wodurch eine schnellere Reaktion des Systems auf sich ändernde Bedingungen erfolgen kann und/oder ein geringrer Ressourcenverbrauch erzielt werden kann.

Wie der Helligkeitsverlauf 26 zeigt, steigt die Helligkeit des von den Frontscheinwerfern 18 abgestrahlten und reflektierten Lichtes vom linken und rechten Bildrand zur Bildmitte hin an, erreicht dann jeweils neben dem Fahrzeug 16 ein Maximum und fällt im weiteren Verlauf nach den Maxima zur Bildmitte hin stark ab.

Die vertikalen Hell-Dunkel-Grenzen 20a, 20b befinden sich an den beiden steilen Helligkeitsabfällen im Helligkeitsverlauf 26. Um eine Blendung des vorherfahrenden Fahrzeugs 16 zu vermeiden, sollen die vertikalen Hell-Dunkel-Grenzen 20a und 20b seitlich im ausreichenden Abstand neben dem vorherfahrenden Fahrzeug 16 verlaufen.

Die tatsächlichen Positionen der vertikalen Hell-Dunkel-Grenzen 20a, 20b werden durch die Steuereinheit 14 mit Hilfe des Bildverarbeitungsverfahrens bestimmt. Anschließend werden die ermittelten tatsächlichen Positionen mit jeweils einer der Soll-Position der vertikalen Hell-Dunkel-Grenze 20a, 20b verglichen und es werden Korrekturdaten, vorzugsweise ein Offset und/oder ein Korrekturfaktor ermittelt. Zusätzlich ist es möglich die Korrekturdaten zu speichern.

Der beschriebene Kalibriervorgang kann somit während der Fahrt des Fahrzeugs 10 ohne Mitwirken des Fahrers und völlig unbemerkt von diesem erfolgen. Da zusätzliche Erzeugen mindestens eines Lichtpunktes, beispielweise mit Hilfe eines Lasers, wie es im Stand der Technik häufig angewandt wird, ist beim Kalibriervorgang nicht nötig.

## Patentansprüche

1. Verfahren zur Kalibrierung mindestens einer durch mindestens einen Frontscheinwerfer eines Fahrzeugs erzeugten vertikalen Hell-Dunkel-Grenze,
bei dem mindestens ein Bild mit einer Abbildung eines Bereichs vor dem Fahrzeug (10) erfasst wird,
bei der Verarbeitung der Bilddaten des erfassten Bildes mindestens eine Position mindestens einer durch mindestens einen Frontscheinwerfer (18) des Fahrzeugs (10) erzeugten vertikalen Hell-Dunkel-Grenze (20a, 20b) als Ist-Position ermittelt wird,
und bei dem bei einer Abweichung der Ist-Position von einer voreingestellten Soll-Position mindestens ein Korrekturwert gebildet wird.

2. Verfahren nach Anspruch 1, **dadurch gekennzeichnet, dass** die durch eine Bilderfassungseinheit erzeugten Bilddaten eines Bildes eines Bereichs vor dem Fahrzeug durch eine Verarbeitungseinheit zum Ermitteln der Ist-Position der mindestens einen vertikalen Hell-Dunkel-Grenze (20a, 20b) verarbeitet werden.

3. Verfahren nach einem der vorhergehenden Ansprüche, **dadurch gekennzeichnet, dass** der mindestens eine ermittelte Korrekturwert gespeichert wird.

4. Verfahren nach einem der vorhergehenden Ansprüche, **dadurch gekennzeichnet, dass** der horizontale Helligkeitsverlauf in einem mit Hilfe einer Bilderfassungseinheit vom Bereich vor dem Fahrzeug (10) erfassten Bildes ermittelt wird.

5. Verfahren nach Anspruch 4, **dadurch gekennzeichnet, dass** zum Ermitteln des Helligkeitsverlaufs nur Helligkeitswerte der Bilderfassungselemente berücksichtigt werden, die voreingestellten Detektionszeilen (22a bis 22e) zugeordnet sind, und dass die mit Hilfe dieser Bilderfassungselemente ermittelte Helligkeitswerte spaltenweise summiert werden.

6. Verfahren nach einem der vorhergehenden Ansprüche, **dadurch gekennzeichnet, dass** eine Veränderung der vertikalen Hell-Dunkel-Grenze (20a, 20b) mit Hilfe einer Veränderung der Kurvenlichteinstellung der Frontscheinwerfer (18) des Fahrzeugs (10) durchgeführt wird.

7. Verfahren nach einem der vorhergehenden Ansprüche, **dadurch gekennzeichnet, dass** eine Verstellung der vertikalen Hell-Dunkel-Grenze (20a, 20b) durch Zu- und/oder Abschalten einer oder mehrerer Lichtquellen mindestens eines Frontscheinwerfers (18) des Fahrzeugs (10) durchgeführt wird.

8. Verfahren nach einem der vorhergehenden Ansprüche, **dadurch gekennzeichnet, dass** das mindestens eine Bild zum Ermitteln der Ist-Position der mindestens einen vertikalen Hell-Dunkel-Grenze (20a, 20b) mit Hilfe eines Active-Pixel-Sensors erfasst wird.

9. Vorrichtung zur Kalibrierung mindestens einer durch mindestens einen Frontscheinwerfer eines Fahrzeugs erzeugten vertikalen Hell-Dunkel-Grenze,
mit einer Bilderfassungseinheit, die Bilddaten mindestens eines Bildes einer Abbildung eines Bereichs vor dem Fahrzeug (10) erzeugt, und
mit einer Verarbeitungseinheit, die die mit Hilfe der Bilderfassungseinheit erzeugten Bilddaten verarbeitet,
wobei die Verarbeitungseinheit mindestens eine Position mindestens einer durch mindestens einen Frontscheinwerfer (18) des Fahrzeugs (10) erzeugte vertikale Hell-Dunkel-Grenze (20a, 20b) als Ist-Position ermittelt,
und wobei die Verarbeitungseinheit bei einer Abweichung der Ist-Position von einer voreingestellten Soll-Position ein Korrekturwert bildet.
